Europäisches Patentamt

European Patent Office

Office européen des brevets

(19)

(11) Numéro de publication: **0 215 768**
**A1**

(12) ## DEMANDE DE BREVET EUROPEEN

(21) Numéro de dépôt: **86870126.9**

(22) Date de dépôt: **10.09.86**

(51) Int. Cl.⁴: **A 47 J 36/38**

(30) Priorité: **20.09.85 BE 215610**

(43) Date de publication de la demande: **25.03.87**
**Bulletin 87/13**

(84) Etats contractants désignés: **AT CH DE FR GB IT LI LU NL SE**

(71) Demandeur: **ELECTRO DOMESTIC BELGIUM, SOCIETE ANONYME, Zoning Industriel de Gembloux-Sauvenière, Chaussée de Tirlemont 75 B-5800 Gembloux (BE)**

(72) Inventeur: **Jenicot, Jean-Marie, rue de Mellery, 19B, B-5862 Gentinne (BE)**

(74) Mandataire: **de Kemmeter, François et al, Cabinet Bede 13, avenue Antoine Depage, B-1050 Bruxelles (BE)**

(54) **Couvercle filtrant pour friteuse.**

(57) Couvercle filtrant pour friteuse présentant une paroi supérieure muni d'ouvertures et une cavité recevant une cartouche filtrante, caractérisé en ce que la cartouche filtrante (7) a un diamètre égal au diamètre intérieur du couvercle (1) et une épaisseur suffisante pour réaliser un écran thermique entre la zone de cuisson dans la cuve (8) de la friteuse et les parois (parois froides 2 et 6) du couvercle (1).

EP 0 215 768 A1

La présente invention est relative à un couvercle filtrant pour friteuse.

Comme on le sait, la vaporisation de l'eau contenue dans les aliments sature très rapidement la cartouche filtrante et provoque également la condensation des vapeurs sur la surface interne du couvercle située directement au-dessus du bain d'huile. Une partie du condensat retombe dans le bain d'huile et de ce fait altère le goût des aliments.

La présente invention vise à remédier de manière simple à ces inconvénients.

A cet effet, la cartouche filtrante a un diamètre égal au diamètre intérieur du couvercle et une épaisseur suffisante pour réaliser un écran thermique entre la zone de cuisson dans la cuve de la friteuse et les parois (parois froides) du couvercle.

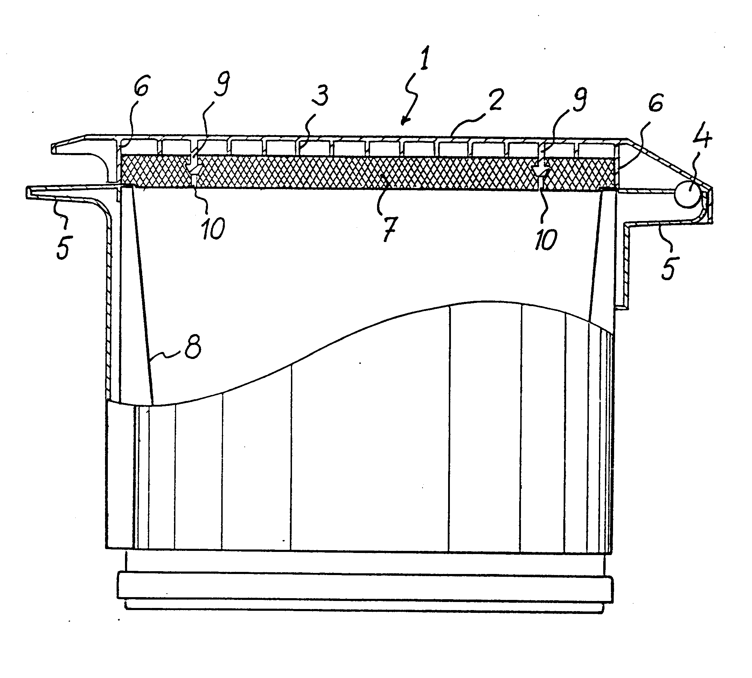

D'autres particularités de l'invention ressortiront de la description donnée ci-après avec référence au dessin ci-annexé dans lequel

la figure unique représente en élévation et coupe partielle une friteuse munie du couvercle selon l'invention.

Le couvercle filtrant 1 est fait d'une matière rigide telle que thermoplastique, polypropylène chargé de 10 % de talc. Il présente une paroi supérieure 2 formant une surface extérieure, munie d'ouvertures constituées soit par une grille 3 soit par des ouïes. Il est pourvu ou non d'une charnière 4 et de poignées 5.

Le couvercle comporte également une paroi latérale périphérique 6 faisant saillie vers l'intérieur de la friteuse de manière à former avec la paroi supérieure précitée une cavité qui reçoit une cartouche filtrante 7 en charbon actif destinée à filtrer les odeurs de cuisson.

La cartouche filtrante 7 a un diamètre égal au diamètre intérieur du couvercle et une épaisseur supérieure à la profondeur de la cavité du couvercle. Elle recouvre toute la face interne de la paroi supérieure 2 ainsi que la paroi latérale 6 réalisant ainsi un écran thermique entre la zone de cuisson dans la cuve 8 et la paroi froide 2 du couvercle.

La fixation du filtre 7 dans le couvercle 1 peut être réalisée de différentes manières, tout en évitant la réalisation d'une pièce de retenue dont la masse serait excessive et qui risquerait de s'échauffer plus lentement, provoquant dès lors une condensation au début de la période de cuisson.

La fixation qui a été retenue ici, n'étant pas limitative mais faisant partie de l'invention, est réalisée par une série de harpons 9 solidaires du couvercle 1, qui permettent d'accrocher le filtre 7 à travers des trous 10 de passage vertical précoupés sur le filtre, garantissant ainsi le positionnement du filtre 7 contre la grille du couvercle et contre ses parois latérales.

Ce principe a l'avantage de ne nécessiter aucun outil pour le remplacement de la cartouche filtrante 7.

Le filtre en charbon actif est constitué d'un matelas en fibres synthétiques entrelacées, par exemple de fibres de polyester, recouvertes de particules de charbon actif, dont le principe est bien connu quant à ses propriétés de filtration des vapeurs provenant d'un bain d'huile porté à des températures avoisinant les 200°C.

Ces particules de charbon actif sont fixées aux fibres synthétiques au moyen d'un liant tel que les colles acryliques.

Cet ensemble, réalisant la cartouche, résiste aux températures des vapeurs de cuisson d'une friteuse.

La densité et la texture du matelas de la cartouche 7 garantissent le passage des vapeurs de cuisson sans perte de charge excessive, évitant toute surpression dans l'enceinte de cuisson.

De par sa faible densité, la partie de la cartouche filtrante 7 et plus particulièrement les fibres de la partie inférieure située au-dessus du bain d'huile subit une élévation en température presque instantanée lorsque le couvercle 1 est refermé sur la cuve, cette température étant supérieure à la température de condensation de l'eau. De ce fait, durant la période de cuisson, aucune condensation ne se présente sur la surface interne du couvercle. Ce principe évite donc tout retour de condensats vers le bain d'huile. Ceci garantit ainsi le goût des aliments cuits dans ce type de friteuse, par l'évacuation à 100 % des vapeurs de cuisson en dehors de la friteuse et à travers la cartouche filtrante 7.

La cartouche filtrante 7 assure également l'étanchéité entre le couvercle et la cuve de l'appareil, par son appui sur tout le pourtour de cette cuve, étanchéité assurée également par la souplesse de la structure du filtre, qui se comprime de quelques millimètres sur tout le pourtour.

Le système présente les avantages suivants :
- plus grande simplicité de conception et d'utilisation en comparaison des systèmes connus, pour un résultat comparable ;
- suppression d'un bac de récupération des condensats ceux-ci ne se manifestant plus ;

- réduction du coût de fabrication en raison du nombre réduit de pièces d'assemblage ;

- facilité de nettoyage et d'entretien en raison de la simplicité du couvercle et de l'accessibilité à toutes les surfaces, ne nécessitant aucun démontage ni désassemblage d'aucune pièce au moyen d'outil ;

- filtration à 100 % des vapeurs de cuisson ;

- joint d'étanchéité entre le couvercle et la cuve assuré par le filtre même ;

- pas de ruissellement de condensation sur la surface interne du couvercle lors du relèvement de celui-ci sur la cuve ;

- pas de retour de condensation dans le bain d'huile, garantissant le goût naturel des aliments.

L'invention n'est évidemment pas limitée aux détails décrits ci-dessus.

Ainsi, on peut utiliser pour le couvercle filtrant toute matière qui présente une résistance thermique suffisante.

En ce qui concerne les épaisseurs de la cartouche filtrante à utiliser pour une friteuse de dimensions courantes, celles-ci peuvent varier de 2 à 3 mm jusqu'à des épaisseurs plus importantes de 20 à 30 mm sans limitation, pour autant que la cartouche filtrante recouvre l'entièreté des surfaces internes du couvercle, tant supérieure que latérale.

REVENDICATIONS

1. Couvercle filtrant pour friteuse présentant une paroi supérieure munie d'ouvertures et une cavité recevant une cartouche filtrante, caractérisé en ce que la cartouche filtrante (7) a un diamètre égal au diamètre intérieur du couvercle (1) et une épaisseur suffisante pour réaliser un écran thermique entre la zone de cuisson dans la cuve (8) de la friteuse et les parois (parois froides 2 et 6) du couvercle (1).

2. Couvercle suivant la revendication 1,comportant une paroi supérieure (2) et une paroi latérale périphérique (6) faisant saillie vers l'intérieur de la friteuse de manière à former une cavité,caractérisé en ce que la cartouche filtrante (7) placée dans la cavité ainsi formée recouvre toute la face interne de la paroi supérieure (2) ainsi que la paroi latérale (6) du couvercle.

3. Couvercle suivant les revendications 1 et 2, caractérisé par un filtre (7) en charbon actif constitué d'un matelas en fibres synthétiques entrelacées recouvertes de particules de charbon actif.

4. Couvercle suivant les revendications 1 à 3, caractérisé en ce qu'il comporte une série de harpons (9) tournés vers l'intérieur de la friteuse et en ce que la cartouche filtrante (7) comporte une série de trous (10) correspondants pour sa fixation au couvercle (1).

Office européen
des brevets

**RAPPORT DE RECHERCHE EUROPEENNE**

0215768

Numéro de la demande

EP 86 87 0126

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-U-8 107 240 (H.-J. KIMMERLE) <br> * Figures 1,9 * | 1 | A 47 J 36/38 |
| | --- | | |
| A | FR-E- 92 795 (S.E.B.) <br> * En entier * | 1 | |
| | --- | | |
| A | DE-A-3 103 450 (MELITTA-WERKE) <br> * En entier * | 1,2 | |
| | --- | | |
| A | FR-A- 344 598 (EBNER) <br> * En entier * | 1 | |
| | --- | | |
| A | US-A-3 343 345 (CAROLAN) <br> * En entier * | 1 | |
| | ----- | | |

**DOMAINES TECHNIQUES RECHERCHES (Int. Cl.4)**

A 47 J

Le présent rapport de recherche a été établi pour toutes les revendications

| Lieu de la recherche | Date d'achèvement de la recherche | Examinateur |
|---|---|---|
| LA HAYE | 02-12-1986 | SCHARTZ |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant